# EUROPÄISCHE PATENTSCHRIFT

(11) **EP 0 972 968 B1**
(45) Veröffentlichungstag und Bekanntmachung des Hinweises auf die Patenterteilung: **06.03.2002**
(21) Anmeldenummer: 98113255.8
(22) Anmeldetag: 16.07.1998
(51) Int. Cl.: F16G 3/04

(54) **Förderbandverbinder**
Fastener for conveyor belt
Element de jonction de courroie transporteuse

(43) Veröffentlichungstag der Anmeldung: 19.01.2000
(73) Patentinhaber: MATO Maschinen- und Metallwarenfabrik Curt Matthaei GmbH & Co KG, D-63071 Offenbach (DE)
(72) Erfinder: Börner, Gerhard, 65203 Wiesbaden (DE)
(74) Vertreter: Quermann, Helmut, Dipl.-Ing.

(56) Entgegenhaltungen:
- DE-A- 4 235 759
- DE-C- 608 511
- DE-C- 648 358
- GB-A- 1 102 993
- GB-A- 1 165 254

## Beschreibung

Die Erfindung betrifft einen Förderbandverbinder mit quer zur Förderrichtung in Reihe angeordneten Verbindungselementen, die an den Förderbandenden befestigt sind, wobei die Verbindungselemente mittels Befestigungselementen, die die Verbindungselemente und das Förderband durchsetzen, mit den Bandenden verbunden sind, sowie mit Zugmitteln, die im Bereich eines Förderbandendes mittels eines oder mehrerer Verbindungselemente mit dem Förderband verbunden sind, wobei sich die Zugmittel in Förderrichtung entlang des Förderbandes erstrecken und in Abstand zum jeweiligen, das Zugmittel mit dem Förderbandende verbindenden Verbindungselement das Zugmittel mittels zusätzlicher Befestigungselemente mit dem Förderband verbunden ist.

Aus der DE 42 35 759 A1 ist grundsätzlich bekannt, die Bandenden von Förderbändern und/oder von Förderbandstücken mit Hilfe von an den Bandenden befestigbaren Verbindungselementen zu verbinden. Die Verbindungselemente selbst werden zum Beispiel mit Hilfe von schrauben-, niet- oder krampenartigen Befestigungselementen an den Gurtenden befestigt. Bei Verwendung von U-förmigen Verbindungselementen werden diese derart angeordnet, daß sich ihre Ösen an den Bandenden in einer kämmenden Lage befinden. Ein Kupplungsstab kann dann zum Verbinden durch die Ösen hindurchgesteckt werden. Bei Verwendung von stegförmigen Verbindungselementen überbrücken diese die Stoßstelle an den Bandenden und werden jeweils an den beiden Bandenden befestigt.

Aus der GB-A-1 102 993 ist ein Förderbandverbinder der eingangs genannten Art bekannt, bei dem zur Erhöhung der Belastbarkeit der Förderbandverbindung zusätzlich in Förderrichtung angeordnete, über die gesamte Breite des Förderbandes wirksame Zugmittel Verwendung finden, die als Drähte ausgebildet sind. Die Drähte sind mit den Verbindungselementen und einer im Abstand zu diesen angeordneten Aufnahmeplatte verbunden, insbesondere verpreßt, wobei die Verbindungselemente und die Aufnahmeplatten mittels der Befestigungselemente sowie der zusätzlichen Befestigungselemente mit dem Förderband verbunden sind. Das Förderband ist hierbei in seinen Endbereichen nicht in seiner Dicke reduziert. Die Verbindungselemente, die Zugmittel und die Aufnahmeplatten liegen somit auf der Ober- und Unterseite des Förderbandes auf diesem auf, so daß der Förderbandverbinder im Betrieb des Förderbandes beidseitig einem erheblichen Verschleiß ausgesetzt ist. Das mittels des Förderbandes geförderte Gut kommt nicht nur mit den Verbindungselementen unmittelbar in Anlage, sondern auch mit den Zugmitteln und den Aufnahmeplatten. Da die Stärke des Förderbandverbinders größer ist als die des Förderbandes, kommt es immer dann, wenn der Förderbandverbinder Antriebs- oder Umlenktrommeln des Förderbandes kontaktiert, zu harten Stößen, womit große Kräfte in den Förderbandverbinder eingeleitet werden. Der erhöhte Verschleiß des Förderbandverbinders ist insbesondere in den beiden Randzonen des Förderbandes von Nachteil, in denen die Verbindungselemente höheren Beanspruchungen unterworfen sind als die weiter innen angeordneten Verbindungselemente.

Aus der DE-PS 608 511 ist ein Kantenschutz für aus Einschlaghaken gebildete Gelenkriemenverbinder bekannt. Bei diesem überdeckt ein Scharnier von U-förmigem Querschnitt mit seinen Schenkeln die Enden der Einschlaghakenreihe an der oberen und unteren Riemenseite und ist mit seinem Steg an den Seiten des Riemens bündig mit dessen Seitenfläche eingelassen. Durch diese Gestaltung soll verhindert werden, daß sich die Einschlaghaken an den äußeren Kanten des Riemenverbinders durch die ungleich über den Querschnitt des Riemens verteilten Zugkräfte nach und nach lösen, so daß ein Haken nach dem anderen austritt. Um die Zugkräfte an den Enden des Gelenkriemenverbinders weit in den Riemen hinein überzuleiten, sind an beiden Seiten des Kantenschutzscharniers weitere Scharnierhälften von U-förmigem Querschnitt durch in der Flucht der Stege liegende Gelenke angeschlossen. Nachteilig ist bei diesem Kantenschutz die Verwendung der Gelenke, die frei angeordnet sind und damit äußerst verschleiß- und zerstöranfällig sind. Ferner werden die die Zugentlastungskräfte nicht unmittelbar, das heißt in Förderrichtung des Förderbandes, in die weiteren Scharnierhälften eingeleitet, sondern über das außenliegende Gelenk, womit dieses und die Scharnierhälften Schub- und Biegekräfte aufnehmen müssen.

Es ist Aufgabe der vorliegenden Erfindung, einen Förderbandverbinder der eingangs genannten Art so weiter zu bilden, daß er bezüglich Ausrissen und Brüchen hoch belastbar ist und im übrigen dessen Verschleißanfälligkeit minimal ist.

Gelöst wird die Aufgabe bei einem Förderbandverbinder der eingangs genannten Art dadurch, daß die Zugmittel ausschließlich in den beiden Seitenbereichen des Förderbandes angeordnet sind, wobei das jeweilige Zugmittel als Gurt ausgebildet ist, sowie das Förderband zumindest eine Deckplatte aufweist, die im Bereich des Gurtes entfernt ist.

Aufgrund der Anordnung der Zugmittel ausschließlich in den beiden Randbereichen des Förderbandes ist sichergestellt, daß die dort auftretenden, besonders hohen Beanspruchungen des Förderbandes kompensiert werden können. Die hohen, im Förderband wirkenden Zugkräfte werden in Abstand zu den Verbindungselementen in das Förderband eingeleitet, und zwar auf direktem Wege, somit in Förderrichtung, da der Kraftschluß zwischen den Verbindungselementen und den zusätzlichen Befestigungselementen direkt über die in Förderrichtung orientierten Zugmittel erfolgt. Es können somit insbesondere diejenigen Zustände sicher beherrscht werden, bei denen das Förderband verformt wird, beispielsweise beim Übergang von der Muldungszone des Förderbandes zur Antriebs- oder Umlenktrommel. Dort geht das gebogene Förderband in die im wesentlichen gerade Form über und ist extremen Randzugbeanspruchungen ausgesetzt. Aufgrund der erfindungsgemäßen Gestaltung des Förderbandverbinders wird ein Brechen der Verbindungselemente wirksam verhindert. Durch die Reduzierung der Stärke des Förderbandes um die eine Deckplatte bzw., bei Anordnung der Gurte auf beiden Seiten des Förderbandes, um die Deckplatten auf beiden Seiten wird erreicht, daß die die Zugentlastung bewirkenden Gurte und deren Befestigungselemente nach innen versetzt sind. Belastungsstöße im Betrieb des Förderbandes und der Verschleiß der Bauteile des Förderbandverbinders sind damit erheblich reduziert. Durch die Wahl des Zugmittels als Gurt ist gewährleistet, daß dieser nur geringem Verschleiß unterliegt, der nicht höher ist als der Verschleiß des Förderbandes.

Gemäß einer besonderen Ausführungsform der Erfindung ist vorgesehen, daß die Stärke der entfernten Deckplatte zumindest der Stärke des Gurtes entspricht. Dies bedeutet, daß die Außenfläche des Gurtes zumindest eine Ebene mit der Außenfläche des Förderbandes (in dem Bereich des Förderbandes, dessen Deckschicht nicht abgetragen ist) bildet. Gegenüber der Außenfläche des Förderbandes stehen damit nur die Befestigungselemente der Verbindungselemente und der Gurte vor. Gemäß einer besonders vorteilhaften Gestaltung ist die Stärke der jeweils entfernten Deckplatte größer als die Stärke des Gurtes, derart, daß das zusätzliche Befestigungselement zum Verbinden des Gurtes auf seiner dem Gurt abgewandten Seite im wesentlichen eine Ebene mit der Außenfläche der angrenzenden Deckplatte des Förderbandes bildet. Liegt die Außenfläche des Befestigungselementes für das jeweilige Verbindungselement auch in dieser Ebene, sind Stoßkanten im Bereich des Förderbandverbinders so weit wie möglich eliminiert, womit sichergestellt ist, daß die Verbindung der Bandenden minimalem Verschleiß, sei es beim Transport des Fördergutes, auch bei dessen Relativbewegung zum Förderband, oder beim Umlenken des Förderbandes unterliegt.

Vorzugsweise besteht der Gurt aus einem Gewebe, insbesondere aus einem Textilgewebe. Auch das Förderband weist zweckmäßig ein Gewebe, insbesondere ein Textilgewebe auf. Dieses kann ein- oder mehrlagig sein und bildet den Zugträger des Förderbandes. Bevorzugt ist das Gewebe mit einer oberen und unteren Deckplatte versehen, die insbesondere aus Gummi besteht. Die jeweilige Deckplatte besitzt die Funktion einer Verschleißschicht. Optimale Laufeigenschaften und Standzeiten der Gurte sind dann gegeben, wenn sie eine ähnliche Elastizität aufweisen wie das um die Deckplatte bzw. Deckplatten reduzierte Förderband. Die Gurte sind vorzugsweise sowohl auf der Lauf- als auch der Tragseite des Förderbandes angeordnet.

Der jeweilige Gurt ist insbesondere so gestaltet, daß er als schmaler, rechteckiger Streifen ausgebildet ist. Die Länge des Gurtes in Förderrichtung des Förderbandes ist vorzugsweise zwei bis fünf mal, insbesondere drei bis vier mal so groß wie dessen Breite. Die Abmessungen der Aussparung im Förderband zur Aufnahme des jeweiligen Gurtes sollte so bemessen sein, daß der Gurt die Aussparung ausfüllt.

Die zusätzliche Verbindung des Gurtes mit dem Förderband kann auf unterschiedliche Art und Weise erfolgen. Bevorzugt geschieht dies mittels Schrauben, Nieten, Krampen mit und ohne Unterlegplatte oder Verbindungselementen. Bei Verwendung von Verbindungselementen, die Ösen und Schenkel aufweisen, umschließen diese seitlich das Förderband und stellen nach Möglichkeit sicher, daß der Gurt über seine gesamte Breite mit dem Förderband verbunden ist. Der jeweilige Gurt kann zusätzlich mit dem Förderband mittels Kleben, Vulkanisieren oder dergleichen verbunden sein, um sicherzustellen, daß eine flächige Verbindung zwischen Gurt und dem in der Dicke reduzierten Förderband gewährleistet ist.

Weitere Merkmale der Erfindung sind in der Beschreibung der Figuren und den Figuren selbst dargestellt.

In den Figuren ist die Erfindung anhand diverser Ausführungsformen beispielsweise dargestellt, ohne auf diese beschränkt zu sein. Es stellt dar:
- Figur 1: einen Schnitt durch eine erste Ausführungsform des erfindungsgemäßen Förderbandverbinders im Bereich eines Förderbandendes, mit dort entfernter oberer Deckplatte und dort positioniertem Gurt,
- Figur 2: einen Schnitt durch eine Ausführungsform gemäß Figur 1, mit zusätzlich entfernter unterer Deckplatte und dort positioniertem weiteren Gurt,
- Figur 3: eine Ansicht einer Fördereinrichtung im Bereich einer Umlenktrommel, veranschaulicht für zwei gemäß der Ausführungsform nach Figur 2 gestaltete Förderbandenden mit diese verbindendem Stab,
- Figur 4: eine Draufsicht der Ausführungsform nach Figur 3,
- Figuren 5 bis 8: für einen Eckbereich des Förderbandendes unterschiedliche Befestigungen für den Gurt, in einer Draufsicht.

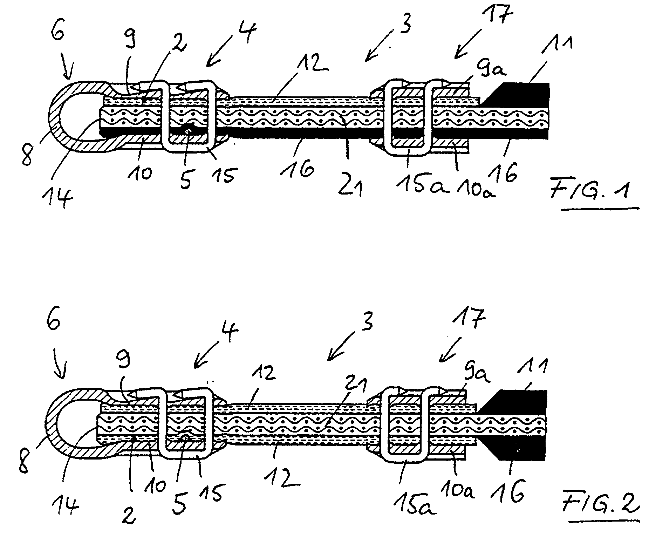

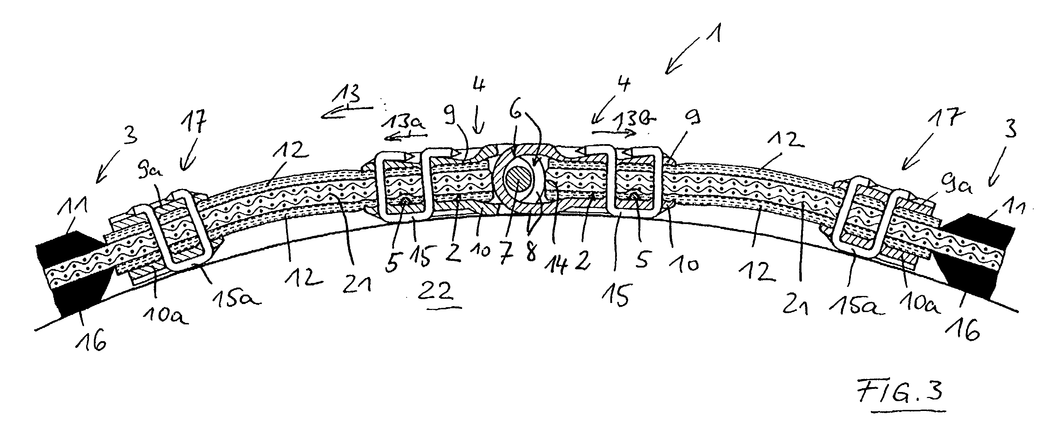

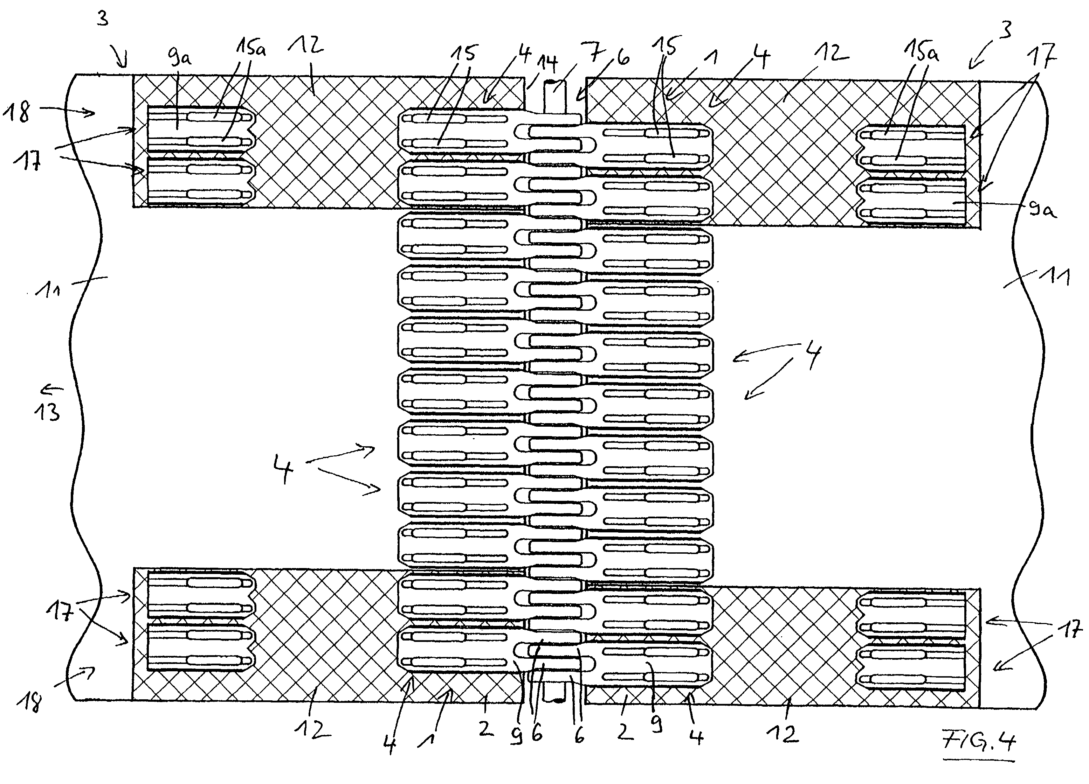

Wie der Darstellung der Figuren 1 bis 4 zu entnehmen ist, besteht ein Förderbandverbinderstreifen 1 zum Befestigen der Enden 2 eines Förderbandes 3 aus mehreren Verbindungselementen 4, die mit Hilfe eines aufgelöteten Drahtes 5 miteinander fluchtend zu einer Einheit zusammengefügt sind. Jedes Verbindungselement 4 weist zur Bildung einer Öse 6 für einen Kupplungsstab 7 einen bogenförmigen Ösensteg 8 und Schenkel 9, 10 auf. Das Förderband 3 ist dreilagig ausgebildet, derart, daß ein Textilfördergurt 21 mit einer oberen Deckplatte 11 und einer unteren Deckplatte 16, die beispielsweise aus Gummi bestehen, versehen ist. Bei der Ausführungsform gemäß Figur 1 ist die obere Deckplatte 11 in den Randbereichen 18 des Bandendes 2 entfernt, zum Beispiel abgehobelt, so daß eine rechteckige Aussparung gebildet ist. Auf den jeweiligen abgehobelten Bereich des Förderbandes 3 ist ein Zugmittel aufgelegt, das, wie der Darstellung der Figur 4 zu entnehmen ist, als schmaler, streifenförmiger Gurt 12 ausgebildet ist und dessen Stärke etwa 1/3 der Stärke der oberen Deckplatte 11 beträgt. Der Gurt 12 besteht aus einem Gewebe, insbesondere einem ein- oder mehrlagigen Textilgewebe. Der eine rechteckige Fläche aufweisende Gurt 12 schließt mit der Stirnfläche 14 des jeweiligen Bandendes 2 ab. Die Schenkel 9 und 10 des jeweiligen Verbindungselementes 4 umgreifen zusammen mit dem Ösensteg 8 in zusammengebautem Zustand das jeweilige Bandende 2 sowie den Gurt 12 U-förmig und werden an dem jeweiligen Bandende 2 mit Hilfe von Befestigungselementen, die als Krampen 15 ausgebildet sind, befestigt, die jeweils paarweise fluchtende Löcher im jeweiligen Verbindungselement 4 sowie das Förderband 3 und den Gurt 12 durchsetzen. Bei der Ausführungsform nach Figur 2 ist, im Unterschied zu der Ausführungsform nach Figur 1, auch die untere Deckplatte 16 des Förderbandes 3 abgehobelt und es ist auch dieser Bereich mit einem Gurt 12 versehen, der mit der Stirnfläche 14 abschließt. Beide Gurte 12 sind identisch. Die Deckschichten 11 und 16 weisen dieselbe Stärke auf. Wie insbesondere der Darstellung der Figuren 3 und 4 zu entnehmen ist, erstrecken sich die Gurte 12 von dem Kupplungsstab 7 weg in Förderrichtung 13 des Förderbandes bzw. entgegengesetzt zur Förderrichtung und es sind die Gurte 12 in Abstand zu den Verbindungselementen 4 zusätzlich mit dem Förderband verbunden, in dem Bereich, wo die Deckplatte 11 bzw. 16 vom Förderband 3 entfernt ist. Das jeweilige Verbindungselement 17 ist in Art des Verbindungselementes 4 ausgebildet, weist aber keinen Ösensteg auf. Die Schenkel 9a und 10a des Verbindungselementes 17 weisen paarweise miteinander fluchtende Bohrungen auf. Befestigungselemente in Form von Krampen 15a durchsetzen die Verbindungselemente 17, das von den Deckplatten 11 und/oder 16 befreite Gewebe 21 des Förderbandes 3 sowie den Gurt bzw. die Gurte 12. Während die umgebogenen Enden der Krampen jeweils in Richtung des Kupplungsstabes 7 orientiert sind, sind die umgebogenen Enden der Krampen 15a vom Kupplungsstab 7 weg orientiert. Befestigt ist jeder Gurt 12 mittels zweier Verbindungselemente 4 und zweier Verbindungselemente 17. Bei dem Gewebe 21 handelt es sich um ein Textilgewebe, das eine ähnliche Elastizität aufweist wie das Gewebe des Gurtes 12. Bei der Ausführungsform nach Figur 2 ist die Stärke des Förderbandes 3 (im nicht reduzierten Bereich) etwa gleich der Klemmstärke der Befestigungselemente 15 und 15a.

Figur 3 veranschaulicht das Förderband im Bereich einer Umlenktrommel 22. Die Zugrichtung der mit dem in Förderrichtung 13 vorlaufenden Bandende 2 verbundenen Verbindungselemente 3 ist mit der Bezugsziffer 13a, die Zugrichtung der mit dem in Förderrichtung 13 nachlaufenden Bandende 2 verbundenen Verbindungselementen 4 mit der Bezugsziffer 13b wiedergegeben. Die Zugrichtungen 13a und 13b erstrecken sich senkrecht zum Kupplungsstab 7.

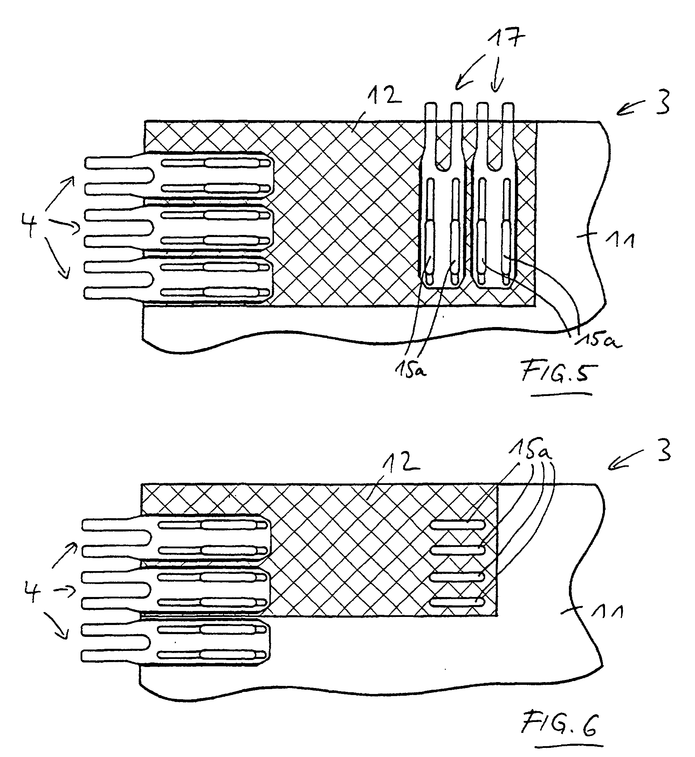

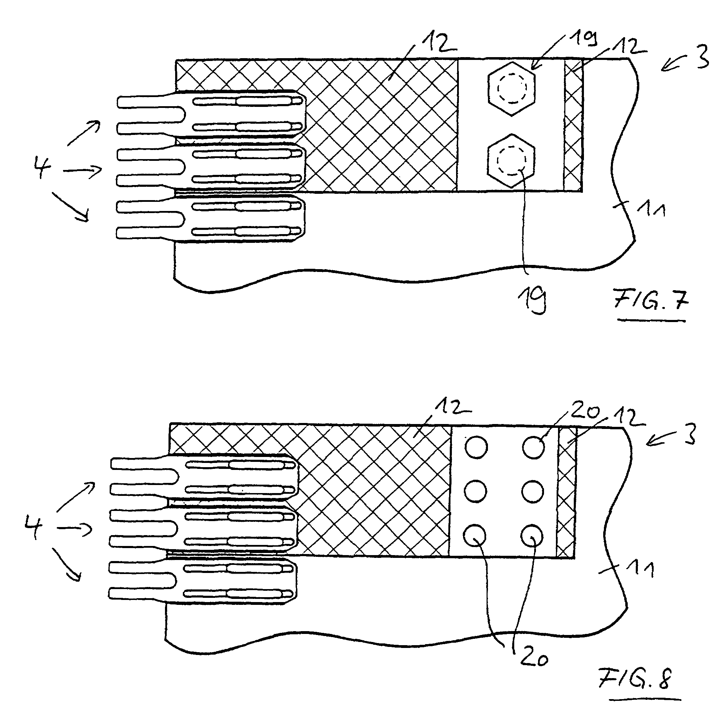

Die Ausführungsform nach Figur 5 veranschaulicht die modifizierte Befestigung des Gurtes 12 im Bereich der Verbindungselemente 17. Es finden Verbindungselemente 17 Verwendung, die identisch den Verbindungselementen 4 gestaltet sind, somit Ösen 6 aufweisen. Die Verbindungselemente 17 werden in diesem Fall seitlich auf das Förderband 3 und den auf der Oberseite und/oder Unterseite des Förderbandes 3 plazierten Gurt 12 aufgeschoben und mittels der Krampen 15a befestigt. Das jeweilige Verbindungselement 17 liegt dabei mit seiner Öse 6 am Förderband 3 an bzw. ist in geringem Abstand zu diesem positioniert und es erstrecken sich die Schenkel 9 und 10 nahezu über die gesamte Breite des Gurtes 12. Bei der Ausführungsform nach der Figur 6 erfolgt die Befestigung des Gurtes 12 in dem den Verbindungselementen 4 abgewandten Bereich ausschließlich mittels Krampen 15a, in dieser Figur sind im wesentlichen über die Breite des Gurtes 12 angeordnet vier Krampen veranschaulicht. Figur 7 zeigt statt der Befestigung mit Krampen eine Befestigung des Gurtes 12 mittels Schrauben 19, Figur 8 eine Befestigung mittels Nieten 20. Bei den vorbeschriebenen Ausführungsformen kann zusätzlich zur Befestigung mittels der Befestigungselemente der Gurt 12 mit dem Gewebe 21 durch Kleben oder Vulkanisieren verbunden sein.

## Patentansprüche

1. Förderbandverbinder mit quer zur Förderrichtung in Reihe angeordneten Verbindungselementen (4), die an den Förderbandenden (2) befestigt sind, wobei die Verbindungselemente (4) mittels Befestigungselementen (15), die die Verbindungselemente (4) und das Förderband (3) durchsetzen, mit den Bandenden (2) verbunden sind, sowie mit Zugmitteln (12), die im Bereich eines Förderbandendes (2) mittels eines oder mehrerer Verbindungselemente (4) mit dem Förderband (3) verbunden sind, wobei sich die Zugmittel (12) in Förderrichtung (13) entlang des Förderbandes (3) erstrecken und in Abstand zum jeweiligen das Zugmittel (12) mit dem Förderbandende (2) verbindenden Verbindungselement (4) das Zugmittel (12) mittels zusätzlicher Befestigungselemente (15a, 17, 19, 20) mit dem Förderband (3) verbunden ist, **dadurch gekennzeichnet, daß** die Zugmittel (12) ausschließlich in den beiden Seitenbereichen (18) des Förderbandes (3) angeordnet sind, wobei das jeweilige Zugmittel als Gurt (12) ausgebildet ist, sowie das Förderband (3) zumindest eine Deckplatte (11, 16) aufweist, die im Bereich des Gurtes (12) entfernt ist.

2. Förderbandverbinder nach Anspruch 1, **dadurch gekennzeichnet, daß** die Stärke der entfernten Deckplatte (11, 16) zumindest der Stärke des Gurtes (12) entspricht.

3. Förderbandverbinder nach Anspruch 2, **dadurch gekennzeichnet, daß** die Stärke der entfernten Deckplatte (11, 16) größer ist als die Stärke des Gurtes (12), derart, daß das zusätzliche Befestigungselement (15a, 17, 19, 20) zum Verbinden des Gurtes (12) auf seiner dem Gurt (12) abgewandten Seite im wesentlichen eine Ebene mit der Außenfläche der angrenzenden Deckplatte (11, 16) des Förderbandes (3) bildet.

4. Förderbandverbinder nach einem der Ansprüche 1 bis 3, **dadurch gekennzeichnet, daß** der Gurt (12) aus einem Gewebe, insbesondere aus einem Textilgewebe, besteht.

5. Förderbandverbinder nach einem der Ansprüche 1 bis 4, **dadurch gekennzeichnet, daß** das Förderband (3) ein Gewebe (21), insbesondere ein Textilgewebe aufweist.

6. Förderbandverbinder nach Anspruch 5, **dadurch gekennzeichnet, daß** das Gewebe (21) mit einer oberen und unteren Deckplatte (11, 16) versehen ist, die insbesondere aus Gummi besteht.

7. Förderbandverbinder nach einem der Ansprüche 1 bis 6, **dadurch gekennzeichnet, daß** der Gurt (12) eine ähnliche Elastizität aufweist wie das um die Deckplatte bzw. Deckplatten (11, 16) reduzierte Förderband (3).

8. Förderbandverbinder nach einem der Ansprüche 1 bis 7, **dadurch gekennzeichnet, daß** die Gurte (12) auf der Ober- und/oder Unterseite des Förderbandes (3) angeordnet sind.

9. Förderbandverbinder nach einem der Ansprüche 1 bis 8, **dadurch gekennzeichnet, daß** der Gurt (12) als schmaler, rechteckiger Streifen ausgebildet ist, dessen Länge in Förderrichtung (13) des Förderbandes (3) zwei bis fünf mal, insbesondere drei bis vier mal so groß ist wie dessen Breite.

10. Förderbandverbinder nach einem der Ansprüche 1 bis 9, **dadurch gekennzeichnet, daß** die zusätzlichen Befestigungselemente als Krampen (15a) mit und ohne Unterlegplatte (9a, 10a), Verbindungselemente (17), Schrauben (19), Nieten (20) oder dergleichen ausgebildet sind.

11. Förderbandverbinder nach einem der Ansprüche 1 bis 10, **dadurch gekennzeichnet, daß** die Gurte (12) zusätzlich mit dem Förderband (3) mittels Kleben, Vulkanisieren oder dergleichen verbunden sind.

## Claims

1. Conveyor belt connector with connecting elements (4) arranged in a row transversely to the conveying direction and attached to the ends (2) of the conveyor belt, the connecting elements (4) being connected to the ends (2) of the belt by means of fastening elements (15) which pass through the connecting elements (4) and the conveyor belt (3), and with traction means (12) which are connected to the conveyor belt (3) in the area of an end (2) of the conveyor belt by means of one or more connecting elements (4), the traction means (12) extending along the conveyor belt (3) in the conveying direction (13) and the traction means (12) being connected to the conveyor belt (3), at a distance from the respective connecting element (4) connecting the traction means (12) to the end (2) of the conveyor belt, by means of additional fastening elements (15a, 17, 19, 20), **characterised in that** the traction means (12) are arranged exclusively in the two lateral areas (18) of the conveyor belt (3), each traction means being formed as a strap (12), and the conveyor belt (3) having at least one covering layer (11, 16) which is removed in the area of the strap (12).

2. Conveyor belt connector according to Claim 1, **characterised in that** the thickness of the removed covering layer (11, 16) is at least equal to the thickness of the strap (12).

3. Conveyor belt connector according to Claim 2, **characterised in that** the thickness of the removed covering layer (11, 16) is greater than the thickness of the strap (12), such that the additional fastening element (15a, 17, 19, 20) for connecting the strap (12) forms, on its side facing away from the strap (12), substantially a plane with the outer face of the adjacent covering layer (11, 16) of the conveyor belt (3).

4. Conveyor belt connector according to one of Claims 1 to 3, **characterised in that** the strap (12) consists of a woven material, in particular a textile fabric.

5. Conveyor belt connector according to one of Claims 1 to 4, **characterised in that** the conveyor belt (3) has a woven material (21), in particular a textile fabric.

6. Conveyor belt connector according to Claim 5, **characterised in that** the woven material (21) is provided with an upper and lower covering layer (11, 16) consisting in particular of rubber.

7. Conveyor belt connector according to one of Claims 1 to 6, **characterised in that** the strap (12) has a similar elasticity to that of the conveyor belt (3) reduced by the covering layer or layers (11, 16).

8. Conveyor belt connector according to one of Claims 1 to 7, **characterised in that** the straps (12) are arranged on the upper and/or lower side of the conveyor belt (3).

9. Conveyor belt connector according to one of Claims 1 to 8, **characterised in that** the strap (12) is formed as a narrow rectangular strip, the length of which in the conveying direction (13) of the conveyor belt (3) is two to five times, and in particular three to four times, as great as its width.

10. Conveyor belt connector according to one of Claims 1 to 9, **characterised in that** the additional fastening elements are formed as cramps (15a) with and without under-plates (9a, 10a), or as connecting elements (17), screws (19), rivets (20) or suchlike elements.

11. Conveyor belt connector according to one of Claims 1 to 10, **characterised in that** the straps (12) are additionally connected to the conveyor belt (3) by means of bonding, vulcanising or suchlike methods.

## Revendications

1. Elément de liaison de courroie transporteuse, comportant :
- des éléments de liaison (4) en ligne, disposés transversalement au sens de transport et fixés aux extrémités (2) de la courroie transporteuse par des éléments de fixation (15) traversant les éléments de liaison (4) et la courroie transporteuse (3),
- des moyens de traction (12) qui, dans la zone d'une extrémité (2) de la courroie transporteuse (3), sont reliés à celle-ci par un ou plusieurs éléments de liaison (4), ces moyens de traction (12) s'étendant le long de cette courroie (3) dans la direction de transport (13), et chaque moyen de traction (12) étant relié à une certaine distance par rapport à l'élément de liaison (4) correspondant reliant le moyen de traction (12) à l'extrémité (2) de la courroie, par des moyens de fixation supplémentaires (15a, 17, 19, 20),
**caractérisé en ce que**
les moyens de traction (12) sont montés exclusivement dans les deux zones latérales (18) de la courroie transporteuse (3), chaque moyen de traction étant constitué par une sangle (12) et la courroie transporteusé (3) comportant au moins une couche de couverture (11, 16) qui est retirée dans la zone de la sangle (12).

2. Elément de liaison selon la revendication 1,
**caractérisé en ce que**
l'épaisseur de la couche de couverture (11, 16) retirée est au moins égale à celle de la sangle (12).

3. Elément selon la revendication 2,
**caractérisé en ce que**
l'épaisseur de la couche de couverture (11, 16) retirée est supérieure à celle de la sangle (12) de manière que l'élément de fixation supplémentaire (15a, 17, 19, 20) servant à relier la sangle (12) a son côté éloigné de la sangle (12) situé essentiellement dans un même plan que la face externe de la couche de couverture voisine (11, 16) de la courroie transporteuse.

4. Elément selon l'une quelconque des revendications 1 à 3,
**caractérisé en ce que**
la sangle (12) est faite d'un tissu en particulier d'un tissu textile.

5. Elément selon l'une des revendications 1 à 4,
**caractérisé en ce que**
la courroie transporteuse (3) est faite d'un tissu (21') en particulier d'un tissu textile.

6. Elément selon l'une des revendications 1 à 6,
**caractérisé en ce que**
le tissu (21) porte une couche de couverture supérieure et inférieure (11, 16) constituée en particulier de caoutchouc.

7. Elément selon l'une des revendications 1 à 6,
**caractérisé en ce que**
la sangle (12) a la même élasticité que la courroie transporteuse (3) de laquelle on a retiré la ou les couches de couverture (11, 16).

8. Elément selon l'une des revendications 1 à 7,
**caractérisé en ce que**
les sangles (12) sont montées sur la face supérieure et/ou la face inférieure de la courroie transporteuse (3).

9. Elément selon l'une des revendications 1 à 8,
**caractérisé en ce que**
la sangle (12) est une bande étroite, rectangulaire dont la longueur selon la direction de transport (13) de la bande transporteuse (3) est trois à cinq fois, de préférence trois à quatre fois, supérieure à sa largeur.

10. Elément selon l'une des revendications 1 à 9,
**caractérisé en ce que**
les éléments de fixation supplémentaires sont des crampons (15a) avec ou sans cale d'épaisseur (9a, 10a), des éléments de liaison (17), des vis (19), des rivets (20) ou similaires.

11. Elément selon l'une des revendications 1 à 10,
**caractérisé en ce que**
les sangles (12) sont reliées de plus à la courroie transporteuse (3) par collage, vulcanisation ou similaire.
